# EUROPEAN PATENT APPLICATION

(11) **EP 3 975 083 A1**
(43) Date of publication of application: **30.03.2022**
(21) Application number: 20275154.1
(22) Date of filing: 29.09.2020
(51) Int. Cl.: G06Q 10/06, G06Q 50/30

(54) **A METHOD FOR OPTIMIZING AD-HOC PROVISION OF CAPACITY IN A MOBILE COMMUNICATIONS NETWORK, AND SYSTEM**

(71) Applicant: Deutsche Telekom AG, 53113 Bonn (DE)
(72) Inventor: WALKER, Nicholas, Twickenham, Middlesex TW1 4JX (GB); BEARD, Timothy Giles, Cambridge, CB4 3HJ (GB); NOLAN, Julian Charles, 1009 Pully (CH)
(74) Representative: Vossius & Partner Patentanwälte Rechtsanwälte mbB

(57) **Abstract**

The invention provides a method and system for optimizing ad-hoc provision of capacity in a mobile communications network, the network comprising a capacity management system and an incentive management system, wherein the capacity management system comprises: load requirements prediction means, a supplier registration sub-system, capacity gap prediction means, and load matching means, and wherein the incentive management system comprises: an incentive registration sub-system, an offer uptake monitoring sub-system, and offer request generation means.

## Description

### Field of the invention

This invention relates to a method for optimizing ad-hoc provision of capacity in a mobile communications network, and a system thereof.

### Background

Device-to-device networks offer the possibility of dynamically-created networks of wireless communication resources to help provide the coverage and low latencies demanded by fifth generation cellular networks (5G) in an efficient manner. Such networks can be constructed from a combination of node types, including fixed cellular infrastructure, portable devices like smartphones, and vehicles.

Vehicles are becoming more autonomous. Further, vehicles are increasingly becoming significant processing units with an increasing number of communication capabilities, which are needed to provide the autonomous capabilities.

Vehicle-to-vehicle (V2V) and vehicle-to-device (V2D) communication will become increasingly important to share information between vehicles and minimize latencies by keeping communications localized to the area of need. W. Sun, E. G. Ström, F. Brännström, Y. Sui, and K.C. Sou, "D2D-based V2V communications with latency and reliability constraints", 13 Jan 2015, https://arxiv.org/pdf/1501.02973.pdf, relates to V2V communications with latency and reliability constraints. More specifically, it relates to a Separate Resource Block allocation and Power control (SRBP) algorithm compared to other existing methods.

Mobile edge computing is a form of network architecture that enables cloud computing to be done at the edge of a mobile network, close to where the processing is needed, thus reducing bandwidth requirements and latency across the network by removing the need to send processing tasks to remote servers. Mobile edge computing is seen as essential for 5G in order to process the volume and velocity of data expected from the massive increase in connected devices.

Precisely targeted, timely offers are effective ways to drive consumer behaviour. A sophisticated understanding of consumer behaviour coupled with real-time data is enabling such methods to be deployed with increasing success.

### Technical problem

However, there is a problem that spikes in mobile network demand can cause quality of service reductions. In this regard, increasing base station density, as needed for 5G, is not always desirable or practical. In particular, in less densely populated areas it is impractical to have high cell density with the result that unusual and unexpected activities can overload the network quickly.

The present invention addresses the above-mentioned problems by providing an improved load-balancing in a mobile communication network, by incentivizing or requesting consumers who are potential providers of network communication and processing capacity to position their equipment according to predicted need via timely offers that cause rerouting of the equipment to a desired location.

### Summary of the invention

The above objects are achieved by the features of the independent claims.

According to an aspect of the invention, the invention provides a method for optimizing ad-hoc provision of capacity in a mobile communications network, the network comprising a capacity management system and an incentive management system, wherein the capacity management system comprises: load requirements prediction means, a supplier registration sub-system, capacity gap prediction means, and load matching means, and wherein the incentive management system comprises: an incentive registration sub-system, an offer uptake monitoring sub-system, and offer request generation means, the method comprising the steps of: predicting, by the load requirements prediction means, a loading on the network for upcoming time periods for all sectors covered by the network, and outputting the predicted loading to the capacity gap prediction means; identifying and predicting, by the capacity gap prediction means, based on the predicted loading and known available capacity, expected processing and communication capacity gaps at specific geographical locations and times, and outputting the predicted capacity gaps information to the load matching means; capturing and storing, by the supplier registration sub-system, an available supplier list comprising supplier information about potential suppliers of capacity and availability for sectors and time periods, wherein the supplier information comprises the following information: current location and schedules, route plans, available communication and processing capacity, and preferences, and outputting the available supplier list to the load matching means; identifying, by the load matching means, based on predicted capacity gaps information and the available supplier list, potential suppliers of processing and communication capacity that can fill the predicted capacity gaps; capturing and storing, by the incentive registration sub-system, a list of potential offers based on one or more of: information about incentive providers and incentives they can offer, location and schedules of incentive providers, and/or details of the offers available, and outputting the list of potential offers to the offer generation means; generating, based on the suggested suppliers list and the potential offers list, by the offer request generation means, a list of offer requests for requesting selected suppliers to visit sectors and to provide additional capacity to fill the predicted capacity gaps, communicating each offer request from the list of offer requests to each respective supplier, and outputting a list of generated offer requests to the offer requests uptake monitoring sub-system; monitoring, by the offer requests uptake monitoring sub-system, the uptake of offer requests by tracking when an offer request is accepted or rejected, and, once an offer request is accepted, updating, by the offer requests uptake monitoring sub-system, the capacity gap prediction means with any additional provided capacity by the accepted request.

According to a preferred aspect, at least one offer request from the list of offer requests comprises a time-bound offer request having a time limit for indicating a time for which the supplier has to accept the respective offer request as well as the period during which the offer request can be used.

According to a preferred aspect, the generating, by the offer generation means, of a list of offers comprises looking at each entry on the suggested suppliers list; and finding a matching offer in the potential offers list for the sector and time period, based on the supplier's preferences.

According to a preferred aspect, the generating, by the offer generation means, of a list of offers comprises adjusting the list of offers based on a priority for filling the predicted capacity gaps. According to a preferred aspect, the method further comprises providing, by the offer requests uptake monitoring sub-system, increasingly better offer requests nearer the time of a predicted communication capacity gap based on the priority of capacity provision.

According to another aspect of the invention, there is provided a system configured to optimize ad-hoc provision of capacity in a mobile communications network, the network comprising a capacity management system and an incentive management system, wherein the capacity management system comprises: load requirements prediction means, a supplier registration sub-system, capacity gap prediction means, and load matching means, and wherein the incentive management system comprises: an incentive registration sub-system, an offer uptake monitoring sub-system, and offer request generation means, wherein: the load requirements prediction means is configured to predict a loading on the network for upcoming time periods for all sectors covered by the network, and to output the predicted loading to the capacity gap prediction means; the capacity gap prediction means is configured to identify and predict, based on the predicted loading and known available capacity, expected processing and communication capacity gaps at specific geographical locations and times, and to output the predicted capacity gaps information to the load matching means; the supplier registration sub-system is configured to capture and store an available supplier list comprising supplier information about potential suppliers of capacity and availability for sectors and time periods, wherein the supplier information comprises the following information: current location and schedules, route plans, available communication and processing capacity, and preferences, and to output the available supplier list to the load matching means; the load matching means is configured to identify based on predicted capacity gaps information and the available supplier list, potential suppliers of processing and communication capacity that can fill the predicted capacity gaps; the incentive registration sub-system is configured to capture and store a list of potential offers based on one or more of: information about incentive providers and incentives they can offer, location and schedules of incentive providers, and/or details of the offers available, and to output the list of potential offers to the offer generation means; based on the suggested suppliers list and the potential offers list, the offer request generation means is configured to generate a list of offer requests for requesting selected suppliers to visit sectors and to provide additional capacity to fill the predicted capacity gaps, communicating each offer request from the list of offer requests to each respective supplier, and to output a list of generated offer requests to the offer requests uptake monitoring sub-system;
the offer requests uptake monitoring sub-system is configured to monitor the uptake of offer requests by tracking when an offer request is accepted or rejected, and, once an offer request is accepted, is configured to update the capacity gap prediction means with any additional provided capacity by the accepted request.

According to a preferred aspect, at least one offer request from the list of offer requests comprises a time-bound offer request having a time limit for indicating a time for which the supplier has to accept the respective offer request as well as the period during which the offer request can be used.

According to a preferred aspect, the offer request generation means is further configured to: look at each entry on the suggested suppliers list; and find a matching offer in the potential offers list for the sector and time period, based on the supplier's preferences.

According to a preferred aspect, the offer request generation means is further configured to adjust the list of offers based on a priority for filling the predicted capacity gaps.

According to a preferred aspect, the offer requests uptake monitoring sub-system is further configured to provide increasingly better offer requests nearer the time of a predicted communication capacity gap based on the priority of capacity provision.

According to the invention, it is possible to increase the quality of service in a communications network while minimizing the need for fixed capacity or the purchase of on-demand capacity.

Further, according to the invention, it is possible to match the needs of a communication network to the available suppliers of ad-hoc capacity.

Still further, according to the present invention, it is possible to incentivize suppliers of capacity to optimally provide spare capacity to the network in a way that benefits suppliers and local businesses without the need for direct payment.

Other aspects, features, and advantages will be apparent from the summary above, as well as from the description that follows, including the figures and the claims.

### Brief description of the drawings

In the drawings:
- FIG. 1: illustrates a system according to an embodiment of the present invention;
- FIG. 2: illustrates a flow diagram according to an embodiment of the present invention; and
- FIG. 3: illustrates a method according to an embodiment of the present invention.

### Detailed description of the invention

In an embodiment, the invention provides a mobile communication network and a method for optimizing ad-hoc provision of capacity in the mobile communications network. The network and the method are designed to incentivize potential suppliers of capacity to be in particular locations at particular times to cover expected gaps in capacity by providing time-bound offers from local businesses to capacity suppliers.

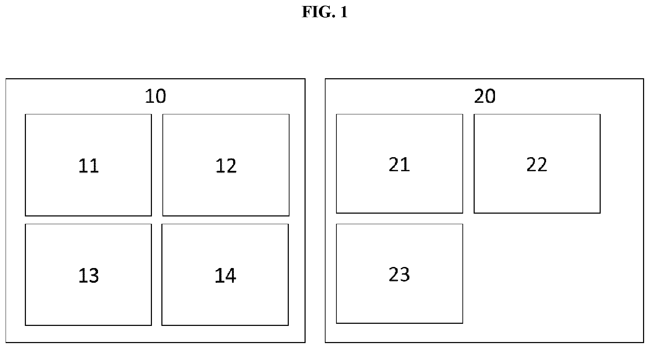

FIG. 1 illustrates a mobile communications network 1 according to an embodiment of the present invention. In FIG. 1, the mobile communications network comprises a capacity management system 10 and an incentive management system 20.

The capacity management system comprises: a load requirements prediction algorithm 11, a supplier registration sub-system 12, a capacity gap prediction algorithm 13, and a load matching algorithm 14.

The load requirements prediction algorithm 11 inputs may comprise one or more of the following: historical loading data, including weekly and seasonal cycles, consumer data, including current and predicted future location of a consumer, and expected use of network capacity; and/or news, events and weather, including planned events such as sporting fixtures, unplanned but unfolding events such as road accidents, and localized weather forecasts.

Based on the above inputs, the load requirements prediction algorithm 11 creates and outputs a set of load predictions for each sector and for each time period as a predicted loading matrix, wherein the matrix comprises a table of values representing predicted loading at each sector and at a respective time period. Loading includes both communication and processing requirements.

The size of the sectors and duration of the time periods may vary and may be determined by the network in advance. For example, small sectors and short time periods may be used in urban areas with rapidly changing consumer activities. Larger sectors and longer time periods may be used in rural areas with little changing activity. The total prediction period may extend to days or weeks. Each time period may include a confidence interval for the load prediction.

For example, the load requirements prediction algorithm 11 may take the historical loading data for each sector and time period (taking into account time of day, day of the week, and time of year, for example) as a starting point and update it based on additional information such as consumer data, news, weather or other events.

A few possible examples are provided, by way of illustrative explanation, but not limited to, as follows: i) if the number of consumers in a location has increased by 10% compared to the historical data, the predicted loading may be increased by 10%; ii) a new location-based augmented reality collaborative smartphone game is popular with a number of consumers expected to be in a location. Based on benchmark data, a consumer playing the game increases mobile edge processing requirements by an extra unit of compute resource per player. Processing loading prediction is updated according to expected number of players; and iii) unusually nice weather is expected to increase the number of users live-streaming from a local beauty spot. Each live stream requires 5Mbps uplink. Communication loading predictions for the area are updated accordingly.

The capacity gap prediction algorithm 13 inputs may comprise: the predicted loading matrix and the available fixed capacity in the network and known variable capacity, e.g. from suppliers who have committed to provide capacity at a sector and time period. The available fixed capacity in the network and known variable capacity may be in the form of a matrix, which is further referred to as the confirmed capacity matrix.

Based on the above inputs, the capacity gap prediction algorithm 13 to generates and outputs the capacity gap matrix. For example, a possible implementation could be a simple subtraction of the confirmed capacity matrix from the predicted loading matrix. Values above zero are then considered capacity gaps.

Preferably, each gap may be allocated a priority based on how important it is to fill the gap. This may then be used to adjust the offers.

The supplier registration sub-system 12 captures and stores information about potential suppliers of capacity. The supplier information may comprise one or more of the following information: current location and schedules, route plans, available communication and processing capacity, and/or preferences such as preferred incentives. The supplier information may be input into the supplier registration sub-system 12 by a plurality of methods including for example manually via computer or smartphone app, or automatically based on permissioned access to the supplier's online diary, email, satellite navigation plans, etc. The information is stored as a list of suppliers, their capacity capabilities plus potential availability for sectors and time periods, further referred to as the available supplier list.

The load matching algorithm 14 inputs may comprise: the available supplier list from the supplier registration sub-system 12; and/or the capacity gap matrix from the capacity gap prediction algorithm 13.

Based on the inputs, the load matching algorithm 14 outputs a set of suggested suppliers as a suggested suppliers list, based on the potential ability of the suppliers to provide the capacity required to fill a gap at a particular sector and time period.

For example, one possible implementation could be that the load matching algorithm 14 takes the capacity gap matrix, and for each gap in the matrix it searches for suitable suppliers from the available supplier list, based on the sector and time period of the capacity gap, and outputs the set of information for all gaps as a suggested supplier list.

The incentive management system 20 generates offers to suppliers and monitors their uptake. This is done as follows. The incentive registration sub-system 21 captures and stores information about incentive providers and the incentives they can offer. This information may be stored in a form of a potential offers list.

The potential offers list may comprise location and schedules of incentive providers, as well as details of the offers available. Incentive provider information may be input into the system by a plurality of methods including, for example, manually via computer or smartphone app.

The incentive management system 20 comprises: an incentive registration sub-system 21, an offer uptake monitoring sub-system 22, and an offer generation algorithm 23.

The offer generation algorithm 23 generates offers for suppliers to incentivize provision of capacity at specific locations and times. The offer generation algorithm 23 inputs may comprise: the suggested suppliers list provided by the capacity management system 10 and the potential offers list provided by the incentive registration sub-system 21.

The offer generation algorithm 23 generates and outputs a set of generated offers for specific suppliers, referred to as a generated offers list. The offers may be delivered to suppliers via e.g. a smartphone for a manual decision on whether to accept or reject the offer, or to an autonomous system which may automatically decide whether the offer can be taken up based on criteria defined by the owner of the autonomous system.

The offer uptake monitoring sub-system 22 monitors the uptake of the generated offers and thus the additional capacity provided by the suppliers. The sub-system 22 outputs information on the additional capacity to the capacity gap prediction algorithm 13 so as to enable the predictions to be updated.

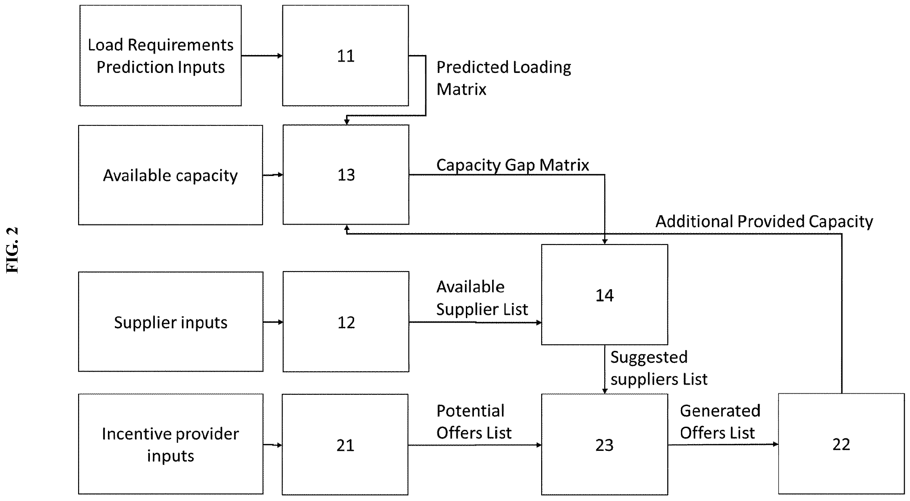

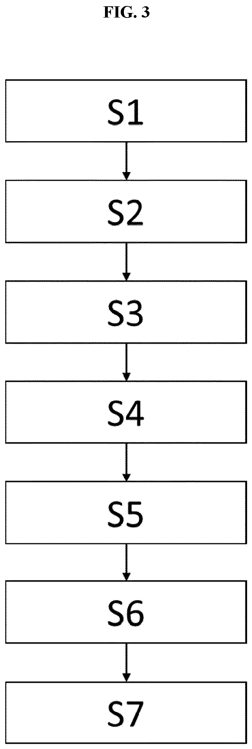

FIG. 2 illustrates a flow diagram according to an embodiment of the present invention and FIG. 3 illustrates a method according to an embodiment of the present invention.

Referring to FIGs. 2 and 3, the method comprises the following steps.

In step S1, the loading on the network is predicted, by the load requirements prediction algorithm 11, for upcoming time periods for all sectors covered by the network.

In step S2, the expected processing and communication capacity gaps at specific geographical locations and times is identified by the capacity gap prediction algorithm 13. In other words, the algorithm 13 predicts gaps in the network's ability to provide an acceptable QoS at specific sectors and time periods.

In step S3, the supplier registration sub-system 12 captures and stores an available supplier list. The supplier list comprises supplier information about potential suppliers of capacity and availability for sectors and time periods. Specifically, the supplier information comprises the following information: current location and schedules, route plans, available communication and processing capacity, and preferences, and outputting the available supplier list to the load matching means.

In step S4, suppliers of processing and communication capacity that could fill the capacity gaps are identified by the load matching algorithm 14. In other words, the algorithm 14 matches potential suppliers of capacity to predicted gaps in capacity as calculated by the capacity gap prediction algorithm 13.

In step S5 the incentive registration sub-system 21 captures and stores a list of potential offers based on one or more of the following information: information about incentive providers and incentives they can offer, location and schedules of incentive providers, and/or details of the offers available, and outputting the list of potential offers to the offer generation means.

In step S6, the incentive registration sub-system 21 generates and distributes time-bound offers for incentivizing or requesting the selected suppliers to visit sectors where their capacity may be used to fill gaps using the offer generation algorithm 23. The offer generation algorithm 23 uses the potential offers list from the incentive registration sub-system 21, along with the suggested suppliers list from the load matching algorithm 14, to create the generated offers list. This may be done, for example, by looking at each entry on the suggested suppliers list and finding a matching offer in the potential offers list for the sector and time period, based on supplier preferences.

Preferably, offers for specific suppliers may be created to optimally incentivize the supplier based on consumer behavior prediction techniques. Information for this may include knowledge of the supplier interests and preferences, plus real-time data about the supplier activities, for example. The specifics of the offers may also be adjusted based on the priority of filling the capacity gap.

The offers in the generated offers list are communicated to the relevant suppliers. The offers may be time-bound - these time limits may include how long the supplier has to accept the offer and also the period during which the offer can be used. The time bounds are set by the capacity gap time period requirements and also by how much certainty in terms of capacity coverage the network requires. For example, an offer may be for a discounted meal between 7 and 9pm but the supplier needs to commit to it by 5pm in order to receive the offer, thus giving the network time to find alternative capacity if the offer is not taken up.

Preferably, depending on supplier preferences, it may be acceptable to consider an offer that would require a supplier to reroute to a nearby sector to provide capacity. As way of an example, an autonomous vehicle may be scheduled to take its owners from their home to visit relatives. They will be passing nearby a restaurant in a sector where there is a capacity gap at lunchtime. A lunchtime offer for the restaurant is provided to the supplier's owners even though it is a 10 minutes detour to the restaurant. If the offer is accepted, the supplier reroutes to the restaurant where it is plugged in and provides capacity while the owners eat lunch.

In step S7, based on uptake of offers, the capacity predictions are updated.

The uptake of the offers is monitored by the offer update monitoring sub-system 22. This includes tracking when an offer is accepted or rejected. Once an offer is accepted, this additional capacity, that will be provided by the supplier accepting the offer, is fed back to the capacity gap prediction algorithm 13. As the current time approaches a time period, the capacity gaps for that time period should reduce, ideally to zero. The network 1 may configure the offer uptake monitoring sub-system 22 to provide increasingly better offers nearer the time to encourage offer uptake depending on the priority of capacity provision.

The invention, as above exemplary described, enables the dynamic provision of cellular network communications and processing capacity, based on predicted loading, through the use of spare consumer device capacity incentivized to be in the right place at the right time to provide the capacity.

Specifically, the invention provides, but not limited to, the following advantages:
1) Enhanced quality of service in a communications network while minimizing the need for fixed network infrastructure.
2) Better utilization of mobile communication and processing resources available in consumer devices such as smartphones and vehicles.
3) Using consumer behavior prediction, targeted real-time incentives can benefit consumers with spare network capacity, the network provider, and local businesses providing the incentives who are visited by the consumers.

While the invention has been illustrated and described in detail in the drawings and foregoing description, such illustration and description are to be considered illustrative or exemplary and not restrictive. It will be understood that changes and modifications may be made by those of ordinary skill within the scope of the following claims. In particular, the present invention covers further embodiments with any combination of features from different embodiments described above and below.

Furthermore, in the claims the word "comprising" does not exclude other elements or steps, and the indefinite article "a" or "an" does not exclude a plurality. A single unit may fulfill the functions of several features recited in the claims. The terms "essentially", "about", "approximately" and the like in connection with an attribute or a value particularly also define exactly the attribute or exactly the value, respectively. Any reference signs in the claims should not be construed as limiting the scope.

## Claims

1. A method for optimizing ad-hoc provision of capacity in a mobile communications network, the network comprising a capacity management system and an incentive management system, wherein the capacity management system comprises: load requirements prediction means, a supplier registration sub-system, capacity gap prediction means, and load matching means, and wherein the incentive management system comprises: an incentive registration sub-system, an offer uptake monitoring sub-system, and offer request generation means, the method comprising the steps of:
predicting (S1), by the load requirements prediction means, a loading on the network for upcoming time periods for all sectors covered by the network, and outputting the predicted loading to the capacity gap prediction means;
identifying and predicting (S2), by the capacity gap prediction means, based on the predicted loading and known available capacity, expected processing and communication capacity gaps at specific geographical locations and times, and outputting the predicted capacity gaps information to the load matching means;
capturing and storing (S3), by the supplier registration sub-system, an available supplier list comprising supplier information about potential suppliers of capacity and availability for sectors and time periods, wherein the supplier information comprises the following information: current location and schedules, route plans, available communication and processing capacity, and preferences, and outputting the available supplier list to the load matching means;
identifying (S4), by the load matching means, based on predicted capacity gaps information and the available supplier list, potential suppliers of processing and communication capacity that can fill the predicted capacity gaps;
capturing and storing (S5), by the incentive registration sub-system, a list of potential offers based on one or more of: information about incentive providers and incentives they can offer, location and schedules of incentive providers, and/or details of the offers available, and outputting the list of potential offers to the offer generation means;
generating (S6), based on the suggested suppliers list and the potential offers list, by the offer request generation means, a list of offer requests for requesting selected suppliers to visit sectors and to provide additional capacity to fill the predicted capacity gaps, communicating each offer request from the list of offer requests to each respective supplier, and outputting a list of generated offer requests to the offer requests uptake monitoring sub-system;
monitoring, by the offer requests uptake monitoring sub-system, the uptake of offer requests by tracking when an offer request is accepted or rejected, and, once an offer request is accepted, updating (S7), by the offer requests uptake monitoring sub-system, the capacity gap prediction means with any additional provided capacity by the accepted request.

2. The method of claim 1, wherein at least one offer request from the list of offer requests comprises a time-bound offer request having a time limit for indicating a time for which the supplier has to accept the respective offer request as well as the period during which the offer request can be used.

3. The method of claim 2, wherein the generating (S6), by the offer generation means, of a list of offers comprises:
looking at each entry on the suggested suppliers list; and
finding a matching offer in the potential offers list for the sector and time period, based on the supplier's preferences.

4. The method of any one of claims 1 to 3, wherein the generating (S6), by the offer generation means, of a list of offers comprises adjusting the list of offers based on a priority for filling the predicted capacity gaps.

5. The method of claim 4, the method further comprising providing, by the offer requests uptake monitoring sub-system, increasingly better offer requests nearer the time of a predicted communication capacity gap based on the priority of capacity provision.

6. A system configured to optimize ad-hoc provision of capacity in a mobile communications network, the network comprising a capacity management system and an incentive management system, wherein the capacity management system comprises: load requirements prediction means, a supplier registration sub-system, capacity gap prediction means, and load matching means, and wherein the incentive management system comprises: an incentive registration sub-system, an offer uptake monitoring sub-system, and offer request generation means, wherein:
the load requirements prediction means (11) is configured to predict a loading on the network for upcoming time periods for all sectors covered by the network, and to output the predicted loading to the capacity gap prediction means;
the capacity gap prediction means (13) is configured to identify and predict, based on the predicted loading and known available capacity, expected processing and communication capacity gaps at specific geographical locations and times, and to output the predicted capacity gaps information to the load matching means;
the supplier registration sub-system (12) is configured to capture and store an available supplier list comprising supplier information about potential suppliers of capacity and availability for sectors and time periods, wherein the supplier information comprises the following information: current location and schedules, route plans, available communication and processing capacity, and preferences, and to output the available supplier list to the load matching means;
the load matching means (14) is configured to identify based on predicted capacity gaps information and the available supplier list, potential suppliers of processing and communication capacity that can fill the predicted capacity gaps;
the incentive registration sub-system (21) is configured to capture and store a list of potential offers based on one or more of: information about incentive providers and incentives they can offer, location and schedules of incentive providers, and/or details of the offers available, and to output the list of potential offers to the offer generation means;
based on the suggested suppliers list and the potential offers list, the offer request generation means (23) is configured to generate a list of offer requests for requesting selected suppliers to visit sectors and to provide additional capacity to fill the predicted capacity gaps, communicating each offer request from the list of offer requests to each respective supplier, and to output a list of generated offer requests to the offer requests uptake monitoring sub-system;
the offer requests uptake monitoring sub-system (22) is configured to monitor the uptake of offer requests by tracking when an offer request is accepted or rejected, and, once an offer request is accepted, is configured to update the capacity gap prediction means with any additional provided capacity by the accepted request.

7. The system of claim 6, wherein at least one offer request from the list of offer requests comprises a time-bound offer request having a time limit for indicating a time for which the supplier has to accept the respective offer request as well as the period during which the offer request can be used.

8. The system of claim 7, wherein the offer request generation means (23) is further configured to:
look at each entry on the suggested suppliers list; and
find a matching offer in the potential offers list for the sector and time period, based on the supplier's preferences.

9. The method of any one of claims 6 to 8, wherein the offer request generation means (23) is further configured to adjust the list of offers based on a priority for filling the predicted capacity gaps.

10. The system of claim 9, wherein the offer requests uptake monitoring sub-system (22) is further configured to provide increasingly better offer requests nearer the time of a predicted communication capacity gap based on the priority of capacity provision.

## Amended claims

### Amended claims in accordance with Rule 137(2) EPC.

1. A method for optimizing ad-hoc provision of capacity in a mobile communications network, the network comprising a capacity management system and an incentive management system, wherein the capacity management system comprises: load requirements prediction means, a supplier registration sub-system, capacity gap prediction means, and load matching means, and wherein the incentive management system comprises: an incentive registration sub-system, an offer uptake monitoring sub-system, and offer request generation means, the method comprising the steps of:
predicting (S1), by the load requirements prediction means, a loading on the network for upcoming time periods for all sectors covered by the network, wherein predicting the loading on the network comprises inputting one or more of the following into the load requirements prediction means: historical loading data, including weekly and seasonal cycles; consumer data, including current/predicted future location of a consumer and expected use of network capacity; and/or news, events and weather, including planned events, unplanned but unfolding events such as road accidents, and localized weather forecasts, and creating and outputting the predicted loading for each sector and for each time period to the capacity gap prediction means;
identifying and predicting (S2), by the capacity gap prediction means, based on the predicted loading and known available capacity, expected processing and communication capacity gaps at specific geographical locations and times, and outputting the predicted capacity gaps information to the load matching means;
capturing and storing (S3), by the supplier registration sub-system, an available supplier list comprising supplier information about potential suppliers of capacity and availability for sectors and time periods, wherein the supplier information comprises the following information: current location and schedules, route plans, available communication and processing capacity, and preferences, and outputting the available supplier list to the load matching means;
identifying (S4), by the load matching means, based on predicted capacity gaps information and the available supplier list, potential suppliers of processing and communication capacity that can fill the predicted capacity gaps for each gap;
capturing and storing (S5), by the incentive registration sub-system, a list of potential offers based on one or more of: information about incentive providers and incentives they can offer, location and schedules of incentive providers, and/or details of the offers available, and outputting the list of potential offers to the offer generation means;
generating (S6), based on the suggested suppliers list and the potential offers list, by the offer request generation means, a list of offer requests for requesting selected suppliers to visit sectors and to provide additional capacity to fill the predicted capacity gaps, communicating each offer request from the list of offer requests to each respective supplier, and outputting a list of generated offer requests to the offer requests uptake monitoring sub-system;
monitoring, by the offer requests uptake monitoring sub-system, the uptake of offer requests by tracking when an offer request is accepted or rejected, and, once an offer request is accepted, updating (S7), by the offer requests uptake monitoring sub-system, the capacity gap prediction means with any additional provided capacity by the accepted request.

2. The method of claim 1, wherein at least one offer request from the list of offer requests comprises a time-bound offer request having a time limit for indicating a time for which the supplier has to accept the respective offer request as well as the period during which the offer request can be used.

3. The method of claim 2, wherein the generating (S6), by the offer generation means, of a list of offers comprises:
looking at each entry on the suggested suppliers list; and
finding a matching offer in the potential offers list for the sector and time period, based on the supplier's preferences.

4. The method of any one of claims 1 to 3, wherein the generating (S6), by the offer generation means, of a list of offers comprises adjusting the list of offers based on a priority for filling the predicted capacity gaps.

5. The method of claim 4, the method further comprising providing, by the offer requests uptake monitoring sub-system, increasingly better offer requests nearer the time of a predicted communication capacity gap based on the priority of capacity provision.

6. A system configured to optimize ad-hoc provision of capacity in a mobile communications network, the network comprising a capacity management system and an incentive management system, wherein the capacity management system comprises: load requirements prediction means, a supplier registration sub-system, capacity gap prediction means, and load matching means, and wherein the incentive management system comprises: an incentive registration sub-system, an offer uptake monitoring sub-system, and offer request generation means, wherein:
the load requirements prediction means (11) is configured to predict a loading on the network for upcoming time periods for all sectors covered by the network, wherein predicting the loading on the network comprises inputting one or more of the following into the load requirements prediction means: historical loading data, including weekly and seasonal cycles; consumer data, including current/predicted future location of a consumer and expected use of network capacity; and/or news, events and weather, including planned events, unplanned but unfolding events such as road accidents, and localized weather forecasts, and to create and output the predicted loading for each sector and for each time period to the capacity gap prediction means;
the capacity gap prediction means (13) is configured to identify and predict, based on the predicted loading and known available capacity, expected processing and communication capacity gaps at specific geographical locations and times, and to output the predicted capacity gaps information to the load matching means;
the supplier registration sub-system (12) is configured to capture and store an available supplier list comprising supplier information about potential suppliers of capacity and availability for sectors and time periods, wherein the supplier information comprises the following information: current location and schedules, route plans, available communication and processing capacity, and preferences, and to output the available supplier list to the load matching means;
the load matching means (14) is configured to identify based on predicted capacity gaps information and the available supplier list, potential suppliers of processing and communication capacity that can fill the predicted capacity gaps for each gap;
the incentive registration sub-system (21) is configured to capture and store a list of potential offers based on one or more of: information about incentive providers and incentives they can offer, location and schedules of incentive providers, and/or details of the offers available, and to output the list of potential offers to the offer generation means;
based on the suggested suppliers list and the potential offers list, the offer request generation means (23) is configured to generate a list of offer requests for requesting selected suppliers to visit sectors and to provide additional capacity to fill the predicted capacity gaps, communicating each offer request from the list of offer requests to each respective supplier, and to output a list of generated offer requests to the offer requests uptake monitoring sub-system;
the offer requests uptake monitoring sub-system (22) is configured to monitor the uptake of offer requests by tracking when an offer request is accepted or rejected, and, once an offer request is accepted, is configured to update the capacity gap prediction means with any additional provided capacity by the accepted request.

7. The system of claim 6, wherein at least one offer request from the list of offer requests comprises a time-bound offer request having a time limit for indicating a time for which the supplier has to accept the respective offer request as well as the period during which the offer request can be used.

8. The system of claim 7, wherein the offer request generation means (23) is further configured to:
look at each entry on the suggested suppliers list; and
find a matching offer in the potential offers list for the sector and time period, based on the supplier's preferences.

9. The method of any one of claims 6 to 8, wherein the offer request generation means (23) is further configured to adjust the list of offers based on a priority for filling the predicted capacity gaps.

10. The system of claim 9, wherein the offer requests uptake monitoring sub-system (22) is further configured to provide increasingly better offer requests nearer the time of a predicted communication capacity gap based on the priority of capacity provision.
